# EUROPÄISCHE PATENTSCHRIFT

(11) **EP 1 257 686 B1**
(45) Veröffentlichungstag und Bekanntmachung des Hinweises auf die Patenterteilung: **08.06.2005**
(21) Anmeldenummer: 01903700.1
(22) Anmeldetag: 06.02.2001
(51) Int. Cl.: C23C 28/00, C23C 4/02

(54) **KOMBINIERTE WÄRMEDÄMMSCHICHTSYSTEME**
COMBINED HEAT INSULATING LAYER SYSTEMS
SYSTEMES COMBINES A COUCHE CALORIFUGE

(30) Priorität: 25.02.2000 DE 10008861
(43) Veröffentlichungstag der Anmeldung: 20.11.2002
(60) Teilanmeldung: 04106398.3
(73) Patentinhaber: Forschungszentrum Jülich GmbH, 52425 Jülich (DE)
(72) Erfinder: DIETRICH, Markus, 63486 Bruchköbel (DE); VASSEN, Robert, 52134 Herzogenrath (DE); CAO, Xueqiang Key Lab of Rare Earth,, 130022, Changchun, Jilin (CN); STÖVER, Detlev, 82382 Niederzier (DE)
(74) Vertreter: Gille Hrabal Struck Neidlein Prop Roos
(86) Internationale Anmeldenummer: PCT/EP2001/001235
(87) Internationale Veröffentlichungsnummer: WO 2001/063006

(56) Entgegenhaltungen:
- EP-A- 0 223 104
- EP-A- 0 765 951
- EP-A- 0 783 043
- EP-A- 0 905 280
- EP-A- 0 935 010
- EP-A- 0 937 787
- WO-A-96/31687
- CH-A- 521 228
- FR-A- 1 393 475
- FR-A- 1 500 175
- US-A- 5 741 596
- PATENT ABSTRACTS OF JAPAN vol. 1996, no. 03, 29. März 1996 (1996-03-29) & JP 07 292453 A (MITSUBISHI HEAVY IND LTD), 7. November 1995 (1995-11-07)
- PATENT ABSTRACTS OF JAPAN vol. 013, no. 095 (C-573), 6. März 1989 (1989-03-06) & JP 63 274751 A (TOYOTA MOTOR CORP), 11. November 1988 (1988-11-11)

## Beschreibung

Die Erfindung betrifft ein Bauteil mit einer Wärmedämmschicht, welches bei hohen Temperaturen eingesetzt werden kann. Ein bekanntes Beispiel für ein solche Bauteile stellen Teile einer Gasturbine dar.

Zur Erhöhung des Wirkungsgrades stationärer und fliegender Gasturbinen werden heute immer höhere Gastemperaturen in den zugehörigen Maschinen angestrebt. Hierzu werden Bauteile der Turbinen mit Wärmedämmschichten versehen, die in der Regel aus mit Y₂O₃ teilstabilisiertem Zirkonoxid (YSZ) bestehen. Eine Haftvermittlerschicht aus einer MCrAlY-Legierung (M = Fe, Co, Ni) zwischen dem Substrat und der Wärmedämmschicht dient hauptsächlich dem Oxidationsschutz des Substrates sowie der besseren Haftung der durch thermisches Spritzen auf das Substrat aufgebrachten YSZ-Keramikschicht. Alternativ kann auch eine Aluminidschicht als Haftvermittlerschicht verwendet werden. Diese kann durch Aluminiumdiffusion in die Substratoberfläche erzeugt werden.

Mit Wärmedämmschicht-Systemen können heute für lange Betriebszeiten Oberflächentemperaturen der Turbinenbauelemente bis zu 1200°C realisiert werden. Eine weitere Erhöhung auf über 1300°C wird angestrebt, ist jedoch mit den gängigen Wärmedämmschicht-Systemen nicht realisierbar. Aus diesem Grund wird weltweit nach neuen Lösungen gesucht, die das teilstabilisierte Zirkonoxid ablösen könnten.

Aus der Druckschrift EP 0 765 951 A3 ist ein metallisches Rohr einer Gasturbine bekannt, auf der eine Haftvermittlerschicht, eine Schicht aus teilstabilisiertem Zirkonoxid, eine gradierte Zwischenschicht und abschließend eine Schicht aus vollstabilisiertem Zirkonoxid aufgebracht ist. Das aufgebrachte Schichtsystem soll das Substrat vor Abnutzung und Korrosion schützen. Das Bauteil kann bei Temperaturen von mehr als 1066 °C eingesetzt werden.

Die Druckschrift JP 0 7292453 offenbart eine Wärmedämmschicht für ein metallisches Element, die eine aus ZrO₂ - Y₂O₃ bestehende Schicht und eine darüber befindliche anorganische Glasur umfasst.

Aus der Druckschrift CH 521 228 ist eine Schutzschicht für ein Metallelement bekannt, die aus einem stabilisiertem Zirkonoxid und/ oder einem Doppelmetalloxid mit einem Schmelzpunkt von mehr als 1900 °C zusammengesetzt ist. Zwischen der Schutzschicht und dem Metallelement kann sich eine Zwischenschicht befinden, die dem Verbinden der Schutzschicht mit dem Metallelement dient.

Der Druckschrift EP 0 937 787 A1 ist eine Wärmedämmschicht für Gasturbinen zu entnehmen, die aus McrAlY, YSZ und Chromoxid / Aluminiumoxid besteht.

Die Druckschrift EP 0 905 280 A2 betrifft eine Wärmedämmschicht aus McrAlY, YSZ, gradiertem Zirkonoxid-, Kalzium-Silizium-Oxid und Kalzium-Silizium-Oxid.

Aufgabe der Erfindung ist die Schaffung einer Wärmedämmschicht, die für den Einsatz bei Temperaturen oberhalb von 1200 °C geeignet ist.

Die Aufgabe der Erfindung wird durch eine Wärmedämmschicht gelöst, die die Merkmale des ersten Anspruchs aufweist. Vorteilhafte Ausgestaltungen ergeben sich aus den Unteransprüchen.

Das anspruchgemäße Bauteil weist an seiner Oberfläche eine Wärmedämmschicht auf. Die Wärmedämmschicht umfasst einen unteren und einen oberen Bereich. Der untere Bereich befindet sich zwischen dem eigentlichen Bauteil und dem oberen Bereich. Der untere Bereich besteht ganz oder überwiegend aus stabilisiertem ZrO₂ oder einem Glas-Metall-Kompositwerkstoff. Der obere Bereich besteht ganz oder überwiegend aus einem Werkstoff, der eine stabile Phase bei Temperaturen von 0°C bis wenigstens 1200°C aufweist. Eine stabile Phase im Sinne der Erfindung liegt vor, wenn im angegebenen Temperaturintervall keine Phasenumwandlung stattfindet, die mit einer sprunghaften Änderung des thermischen Ausdehnungskoeffizienten gekoppelt ist.

Der untere Bereich weist insbesondere einen größeren thermischen Ausdehnungskoeffizienten als der obere Bereich auf. Es hat sich gezeigt, dass dann in der Praxis stabile Wärmedämmschichten hergestellt werden können.

In einer verbesserten Ausführungsform der Erfindung befindet sich die Wärmedämmschicht auf einer Haftvermittlerschicht.

Der untere Bereich wird durch eine Schicht gebildet, die im folgenden Kontaktschicht genannt wird. Sie besteht aus YSZ oder aus Glas-Keramik-Kompositwerkstoffen

Es hat sich gezeigt, dass Rauhigkeiten der Oberfläche, auf die eine Wärmedämmschicht aufgebracht ist, mechanische Spannungen in der Wärmedämmschicht verursachen. Regelmäßig sind diese mechanischen Spannungen maßgeblich für auftretende Defekte in der Wärmedämmschicht verantwortlich. Bei der Wahl des Materials der Kontaktschicht ist daher bevorzugt auf einen großen thermischen Ausdehnungskoeffizienten zu achten, da mechanische Spannungen gering gehalten werden. Der thermische Ausdehnungskoeffizient der Wärmedämmschicht sollte wenigstens im unteren Bereich wenigstens 10*10⁻⁶ K⁻¹ betragen, um das Auftreten von geringen mechanischen Spannungen zu erreichen.

Die Kontaktschicht ist insbesondere wenigstens 50 µm, bevorzugt wenigstens 100 µm dick, um die vorgenannte gewünschte Wirkung zu erzielen.

Damit die Kontaktschicht nicht zu hohen Temperaturen ausgesetzt ist, befindet sich über dem unteren Bereich der obere Bereich mit der geringen Wärmeleitfähigkeit.

Die Dicke dieses Bereichs ist so dick zu wählen, dass der untere Bereich hinreichend gegenüber der Temperatur geschützt wird.

Der obere Bereich kann ebenfalls in Form einer Schicht vorliegen, die im folgenden Deckschicht genannt wird.

Als Material für die Deckschicht bzw. den oberen Bereich kommen prinzipiell alle Oxide mit Perowskitstruktur oder dotierte Varianten dieser Werkstoffe in Frage, die vor allem die Kriterien der Phasenstabilität und der niedrigen Wärmeleitfähigkeit erfüllen. Beispiele hierfür sind , Oxide mit Perowskitstruktur oder auch dotierte Varianten dieser Werkstoffe. Die beispielhaft genannten Werkstoffe weisen die gewünschte niedrige Wärmeleitfähigkeit sowie die gewünschte stabile Phase bei der angestrebten Betriebstemperatur von über 1200 °C auf.

Die Schichten können durch verschiedene Verfahren aufgebracht werden, wie zum Beispiel LPPS (Low pressure plasma spraying), APS (Air plasma spraying) und EB-PVD (Elektron beam physical vapor deposition). Andere Verfahren sind jedoch grundsätzlich ebenfalls möglich.

Bei der Auswahl der Werkstoffe ist besonderes auch auf Thermozyklierbarkeit zu achten. Darunter wird die Beständigkeit gegenüber extremer zyklischer Temperaturwechselbeanspruchung.verstanden. Ein frühzeitiges Versagen beim Thermozyklieren tritt in Schichtsystemen häufig aufgrund der unterschiedlichen thermischen Ausdehnungskoeffizienten der verschiedenen Werkstoffe auf. Beim Aufheizen und Abkühlen der Schichten entstehen thermische Spannungen, die zur Schädigung und zum Versagen des Gefüges führen können. Der thermische Ausdehnungskoeffizient erreicht bei den verwendeten Substratwerkstoffen und der Haftvermittlerschicht mit ca. 14*10⁻⁶ K⁻¹ einen für keramische Systeme hohen Wert. Das gängige Wärmedämmschicht-Material YSZ weist einen thermischen Ausdehnungskoeffizienten von 10,4*10⁻⁶ K⁻¹ auf. Als Substratwerkstoff wird der Werkstoff bezeichnet, auf den die Wärmedämmschicht gegebenenfalls inklusive der Haftvermittlerschicht aufgebracht wird.

Bei gleicher Wärmeleitfähigkeit der Wärmedämmschicht und gleicher Schichtdicke führen höhere Oberflächentemperaturen auch zu höheren Temperaturen an der Grenzfläche zur Haftvermittlerschicht und dem Substratwerkstoff. Auch diese Temperatursteigerung führt in den aktuellen Wärmedämmschicht-Systemen zur Schädigung des Verbundes. Beim erfindungsgemäßen Wärmedämmschicht-System ist deshalb auf eine geringe Wärmeleitfähigkeit sowohl im unteren als auch im oberen Bereich geachtet worden. Je höher die Wärmeleitfähigkeit des oberen Bereichs ist, desto dicker muss der Bereich sein. Da auch das Material des unteren Bereichs (Kontaktschicht) nur begrenzte thermische Stabilität aufweisen kann, muss die gute Wärmedämmung besonders für den oberen Bereich (Deckschicht) gelten.

Das gemäß Stand der Technik eingesetzte YSZ unterliegt bei Temperaturen über 1200°C einer Phasenumwandlung, die zur Schädigung der Schicht führen kann. Diese Problem ist erfindungsgemäß durch Vorsehen des oberen Bereichs gelöst worden. Bei dem Werkstoff ist daher auf Phasenstabilität bis zu den gewünschten Einsatztemperaturen, möglichst sogar bis zum Schmelzpunkt zu achten.

Bisher wurde noch kein Werkstoff gefunden, der sämtlich gewünschten Eigenschaften in ausreichendem Maße miteinander verbindet. Einige Materialien erfüllen jedoch eine oder zwei der Voraussetzungen. Die Erfindung beruht daher auf dem Gedanken, verschiedene keramische Materialien in einem Schichtsystem zu kombinieren. Hierbei weist das Material in Kontakt zur Haftvermittlerschicht einen thermischen Ausdehnungskoeffizienten und eine Schadenstoleranz auf, die die Thermozyklierbarkeit gewährleistet, während das Material an der Oberfläche der Schicht die nötigen Eigenschaften wie z.B. Phasenstabilität aufweist, um Temperaturen über 1200°C zu widerstehen.

## Patentansprüche

1. Bauteil einer Gasturbine mit einer Wärmedämmschicht auf seiner Oberfläche mit folgenden Merkmalen:
a) die Wärmedämmschicht umfasst einen unteren und einen oberen Bereich;
b) der untere Bereich befindet sich zwischen dem Bauteil und dem oberen Bereich;
c) der untere Bereich besteht ganz oder überwiegend aus YSZ oder einem Glas-Metall-Kompositwerkstoff;
d) der obere Bereich besteht ganz oder überwiegend aus einem Werkstoff, der eine stabile Phase bei Temperaturen von 0°C bis wenigstens 1200 °C zeigt;
**dadurch gekennzeichnet, dass**
e) der obere Bereich zumindest überwiegend aus Oxiden mit Perowskit struktur oder dotierten Varianten dieser Werkstoffe besteht.

2. Bauteil nach Anspruch 1, bei dem der thermische Ausdehnungskoeffizient im unteren Bereich größer ist als der thermische Ausdehnungskoeffizient im oberen Bereich.

3. Bauteil nach Anspruch 1 oder 2, bei dem sich die Wärmedämmschicht auf einer Haftvermittlerschicht befindet.

4. Bauteil nach einem der vorhergehenden Ansprüche, bei dem der untere Bereich durch eine Schicht gebildet ist, die wenigstens 50 µm, bevorzugt wenigstens 100 µm dick ist.

5. Bauteil nach einem der vorhergehenden Ansprüche, bei dem der obere Bereich wenigstens 0,1 mm dick ist.

## Claims

1. Structural component of a gas turbine with a heat-insulating layer on its surface providing the following features:
a) the heat-insulating layer comprises a lower and an upper region;
b) the lower region is disposed between the structural component and the upper region;.
c) the lower region consists entirely or predominantly of YSZ or a glass-metal composite material;
d) the upper region consists entirely or predominantly of a material, which provides a stable phase at temperatures from 0°C to at least 1200°C;
**characterised in that**
e) the upper region consists at least predominantly of oxides with perovskite structure or doped variants of these materials.

2. Structural component according to claim 1, wherein the coefficient of thermal expansion in the lower region is greater than the coefficient of thermal expansion in the upper region.

3. Structural component according to claim 1 or 2, wherein the heat-insulating layer is disposed on an adhesion-providing layer,

4. Structural component according to any one of the preceding claims, wherein the lower region is formed by a layer, which is at least 50 µm thick, preferably at least 100 µm thick.

5. Structural component according to any one of the preceding claims, wherein the upper region is at least 0.1 mm thick.

## Revendications

1. Elément structurel d'une turbine à gaz avec une couche calorifuge sur sa surface avec les caractéristiques suivantes :
a) la couche calorifuge comprend une zone inférieure et une zone supérieure ;
b) la zone inférieure se trouve entre l'élément structurel et la zone supérieure ;
c) la zone inférieure consiste complètement ou partiellement en YSZ ou en un matériau composite verre-métal ;
d) la zone supérieure consiste complètement ou essentiellement en un matériau, qui montre une phase stable à des températures de 0°C à au moins 1200°C,
**caractérisé en ce que**
e) la zone supérieure consiste au moins essentiellement en des oxydes avec structure perowskite ou des variantes dopées de ce matériau.

2. Elément structurel selon la revendication 1, dans lequel le coefficient d'expansion thermique dans la zone inférieure est supérieur au coefficient d'expansion thermique de la zone supérieure.

3. Elément structurel selon la revendication 1 ou 2, dans lequel la couche calorifuge se trouve sur une couche d'agent adhésif.

4. Elément structurel selon l'une des revendications précédentes, dans lequel la zone inférieure est formée d'une couche, qui présente une épaisseur d'au moins 50 µm, de préférence au moins 100 µm.

5. Elément structurel selon l'une des revendications précédentes, dans lequel la zone supérieure est épaisse d'au moins 0,1 mm.
